# EUROPEAN PATENT SPECIFICATION

(11) **EP 1 541 401 B1**
(45) Date of publication and mention of the grant of the patent: **09.05.2007**
(21) Application number: 04013102.1
(22) Date of filing: 03.06.2004
(51) Int. Cl.: B60K 6/04, F16D 21/06

(54) **Two-clutch transmission element for motor vehicle hybrid drivetrain, assembly method and motor vehicle equipped with such an element**
Doppelkupplungsübertragungselement für ein hybrides Fahrzeugsantriebssystem, Verfahren für den Aufbau des Elementes und Motorfahrzeug mit einem solchen Element
Elément de transmission à embrayage double pour véhicule hybride, procédé d'assemblage de cet élément, et véhicule à moteur avec cet élément

(30) Priority: 13.12.2003 EP 03028790
(43) Date of publication of application: 15.06.2005
(73) Proprietor: BorgWarner Inc., Auburn Hills MI 48326 (US)
(72) Inventor: Heinrich, Johannes, Dr., 61381 Friedrichsdorf (DE); Hauck, Hans Jürgen, 76137 Karlsruhe (DE)
(74) Representative: Patentanwälte Westphal, Mussgnug & Partner

(56) References cited:
- WO-A-99/22955
- DE-A1- 19 833 378
- FR-A- 2 830 589
- US-A- 3 964 587
- US-A- 5 232 411
- US-B1- 6 533 692

## Description

The invention relates to a transmission element for a drivetrain of parallel hybrid type.

A parallel hybrid drivetrain is to be understood as meaning a drivetrain providing a wheelset with mechanical power from at least one engine or motor of "irreversible" type (generally a combustion engine) and at least one engine or motor of "reversible" type (generally an electric machine that will hereinafter also be known as an "electric motor", it being understood that this "motor" will be able to operate in motor mode and in generator mode), and in which the power from the two engines/motors is of mechanical nature.

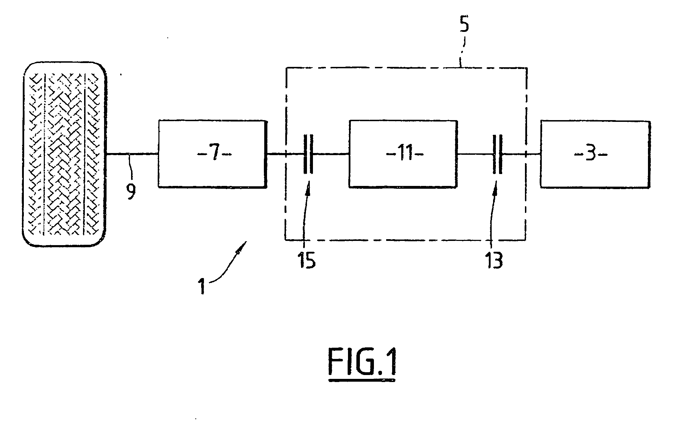

Figure 1 schematically depicts a parallel hybrid drivetrain of known type (for example of the type disclosed in the French Patent Application published under the number 2 814 121) to which the invention more specifically applies.

Such a drivetrain 1 therefore essentially comprises a combustion engine (or more generally an irreversible motor or engine) 3, a transmission element 5 and a gearbox 7 the input of which is connected to the transmission element 5 and the output of which is connected to a wheelset 9.

The transmission element 5 comprises an electric machine (or more generally a reversible motor or engine) 11 of the hybrid drivetrain and a first clutch 13 providing the connection between the combustion engine 3 and the electric machine 11, and a second clutch 15 providing the connection between the electric machine 11 and the gearbox 7.

The invention therefore relates more especially to a transmission element for a drivetrain according to the preamble of claim 1. Such transmission elements are known from WO 99/22955, US 6,533,692 B1 or FR 2 830 589 A1, for example.

In most known hybrid drivetrains, the transmission element incorporating the electric motor and the two clutches for connection one to the combustion engine and one to the gearbox is not designed to be readily interchangeable with a simple clutch as used in conventional drivetrains with a single power source.

The problem that the invention sets out to solve consists in designing a constructive simple transmission element as described hereinabove, which can be fitted to a conventional single-source drivetrain and be substituted for a single clutch, to form a drivetrain of the parallel hybrid type, without major modification to the other elements of the drivetrain.

This problem is solved by a transmission element according to claim 1.

Advantageous modifications and arrangements according to the invention are objects of the subclaims.

To this end, the two-clutch (preferably a dual- or twin clutch) transmission element according to the invention comprises a casing comprising a first half-shell rotationally supporting the input shaft and a second half-shell rotationally supporting the output shaft, these two half-shells defining a housing in which the two clutches and the electric motor are coaxially mounted. The intermediate member and the rotor mesh with one another via complementary axial sets of teeth, whereas, the sets of teeth are constituents of the additional first and second half-shells.

The benefit of the invention can essentially be explained by the low number of hybrid vehicles produced these days, compared with the number of conventionally powered vehicles of the same model, generally powered by combustion engines. Thus, for a given model of vehicle, a motor manufacturer produces on a daily basis a great many gearboxes, simple "clutch packs" (or clutch boxes) and combustion engines of the same type, whereas it produces a low number of transmission elements, with electric motor and two clutches, for a hybrid drivetrain.

The essential advantage afforded by the invention consists in providing a transmission element with an electric motor and two clutches that is in the form of a stand alone "box" or "module" that can be mounted in place of the simple clutch pack, without major modification to the gearbox or to the combustion engine. The manufacturer may, by virtue of the invention, switch very flexibly from production of combustion-engine-powered vehicles to production of hybrid vehicles, and vice versa, by changing just one of the components in the drivetrain. Production may possibly be performed on the same production line.

The constructed size of the two- or twin-clutch may be optimised when at least one of the two clutches is arranged radially inside the rotor of the electric machine.

A further optimisation of the constructed size may be achieved, when the two clutches are arranged radially inside the stator of the electric machine.

Such an arrangement advantageously is characterized in that the first half-shell is secured to the stator and rotationally supports the rotor.

A quite simple constructive arrangement is formed, when the two clutches, the input shaft and output shaft and the intermediate member form part of a module arranged as a single piece in the housing.

The module in an advantageous embodiment may be arranged within a casing comprising an additional first half-shell and an additional second half-shell.

The second half-shell advantageously is torque-proof connected to the rotor and/or the first half-shell is torque-proof connected to the intermediate member via a hub.

Advantageously, the sets of teeth are of claws type.

When the two clutches are of the wet type, the additional first and second half-shells, in particular in the area of the axial sets of teeth, are sealed against a lubricating and/or cooling fluid in a manner that when rotating the two clutches a toroid of the lubricating and/or cooling fluid can be built within the casing comprising the additional first and second half-shells. Such a toroid helps having a quite effective cooling of the discs of the clutches.

Means are provided which allow adjusting the quantity of lubricating and/or cooling fluid available for building the toroid of the lubricating and/or cooling fluid. Such means are described in detail in European Application 03028790.8, the content of which herewith is part of the present application.

In particular, the means may comprise an outflow arrangement which is in a closed or slightly opened position at a low rotational speed of the clutches keeping a high quantity of lubricating and/or cooling fluid for lubricating the toroid and which is in a opened position at a high rotational speed of the clutches keeping a low quantity of lubricating and/or cooling fluid for building the toroid or prevents from building the toroid. Details are also disclosed in European Patent Application 03028790.8 the content of which is part of the present application.

The outflow arrangement advantageously may be integrated in a ring which seals the area of the axial sets of teeth. The number of necessary components are low.

In an advantageous embodiment the toroid fills at least one of the clutches or in particular only one of the clutches with lubricating and/or cooling fluid. An effective cooling is achieved for the clutch filled by the fluid toroid. Low drag torque is achieved for the clutch not filled by the cooling fluid toroid.

The means comprise another outflow arrangement which adjusts the inner diameter of the toroid. With this measure one may be sure that only the relevant parts of a clutch are intensely cooled by the fluid toroid and the other parts are essentially free from cooling fluid.

The other outflow arrangement preferably comprises outflow openings within the casing comprising the additional first and second half-shells.

When the two clutches are of the wet type, the outer housing is preferably sealed against the lubricating and/or cooling fluid. No lubricating and / or cooling fluid is lost. Furthermore the lubricating and / or cooling fluid which is cooling the clutches is additionally cooling the rotor in a very effective way because of the direct contact of the fluid with the rotor.

In an advantageous arrangement to the invention implies that the two clutches are returned to the engaged position, i.e. the clutches are of the normally closed type. In particular this means that the two clutches are opened by applying hydraulic pressure and without applying hydraulic pressure that the two clutches are kept in the closed position for example by use of a spring number.

In an alternative arrangement, at least one of the clutches is of the normally open type. A clutch of the normally open type is closed by applying hydraulic pressure.

For lubricating and / or cooling reasons as well as for torque transfer reasons the two clutches are advantageously arranged in a stepped configuration, one being arranged radially on the outside of the other.

For the same reasons, in a preferred embodiment the first clutch is arranged radially on the outside of the second clutch.

In a preferred arrangement the stator is arranged radially on the outside of the rotor and the second clutch is arranged radially on the inside of the rotor.

In a preferred embodiment the outer clutch is used as a starter clutch and/or the inner clutch is used as a coupling clutch. The starter clutch is able to endure thermal dissipation losses of high magnitude which also needs an effective cooling. The coupling clutch does not need to endure high thermal dissipation losses but the drag torque needs to be reduced.

In advantageous modification implies that at least one of the clutches, and preferably both, is/are actuated by means of a control fluid via a respective single pressing component.

The clutches are preferably activated in axial direction.

In a preferred embodiment the transmission element comprises an axial fluid supply tube, particularly an axial hydraulic supply tube, secured to one of the half-shells and projecting towards the inside of the housing.

Furthermore, advantageously the clutches comprise one common carrier for friction discs.

The common carrier for friction discs in a preferred arrangement is the inner carrier for friction discs of one of the clutches and the outer carrier for friction discs of the other of the clutches.

Preferably, the common carrier is in its longitudinal section of T-shape.

The radial leg of the T-shape may include at least one axial passageway where through an actuator of the other of the clutches is conducted.

The actuator of the other of the clutches may be arranged radially inside the one of the clutches.

Furthermore, one or more spring elements for retaining the activator may be arranged radially inside the one of the clutches.

The invention is also aimed at a motor vehicle comprising a drivetrain of parallel hybrid type, the said drivetrain comprising a combustion engine, a gearbox and a transmission element as described hereinabove connecting the combustion engine to the gearbox.

The invention is also aimed at a method of assembling a transmission element as described hereinabove.

According to a first embodiment, the method comprises the following successive steps:
. a subassembly securely comprising the first clutch, the second clutch and the intermediate member is mounted on a subassembly comprising the second half-shell; and
. a subassembly securely comprising the first half-shell and the electric machine is mounted on the assembly thus formed.

According to a second embodiment, the method comprises the following successive steps:
. a subassembly securely comprising the first clutch, the second clutch and the intermediate member is mounted on a subassembly securely comprising the first half-shell and the electric machine; and
. the assembly thus formed is mounted on a subassembly comprising the second half-shell.

As a preference, the supply tube is mounted beforehand on the second half-shell so as to assemble the subassembly comprising the second half-shell.

Particular embodiments of the invention will now be described in greater detail with reference to Figures 2, 3, 4A to 4J of the attached drawings, in which:
- Figure 2 is a part view in axial half section of a transmission element according to the invention;
- Figure 3 is a detail view of Figure 2, on a larger scale, depicting the second transmission element module essentially comprising the clutches, the input and output shafts, the intermediate member and the pistons; and
- Figures 4A to 4J are similar views, on a smaller scale, illustrating the successive steps of a particular mode of assembling the transmission element.

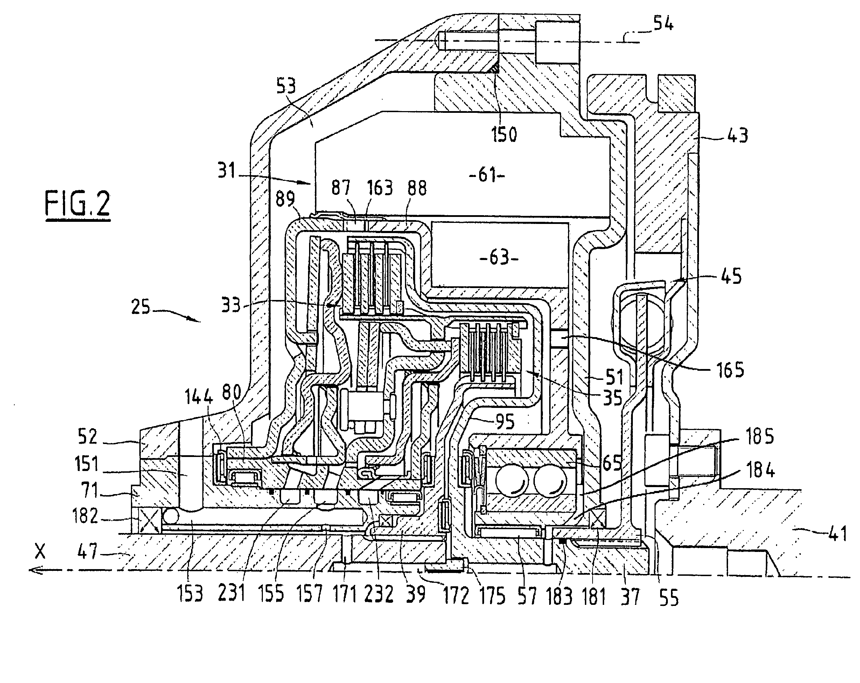

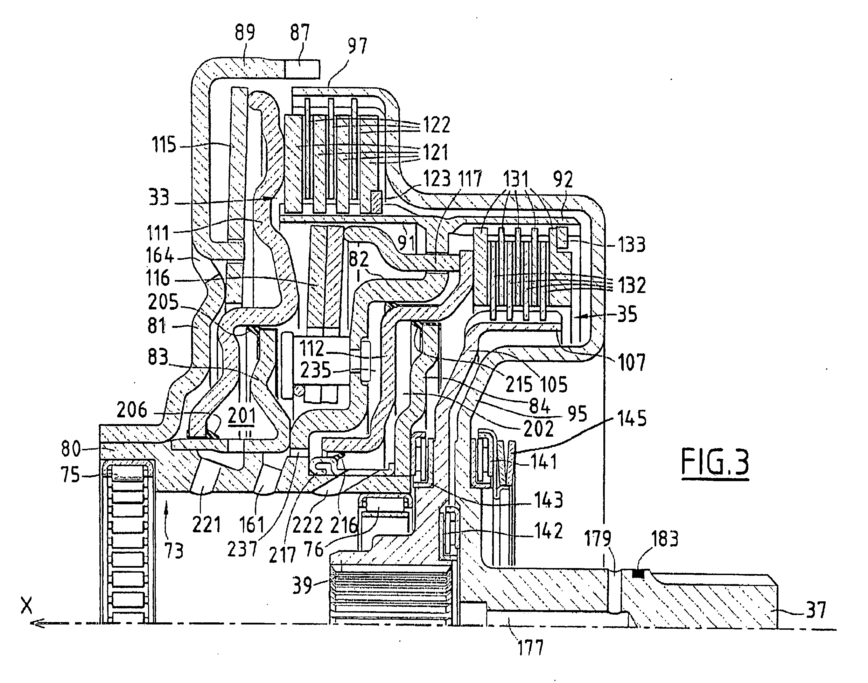

Figures 2 and 3 depict a transmission element 25 according to the invention intended, like the element 5 in Figure 1, to connect a combustion engine to a gearbox. Like the element 5, the element 25 of the invention comprises an electric machine 31 that will also be called an "electric motor", a first clutch 33 and a second clutch 35.

The transmission element 25 further comprises a movement input shaft 37 and a movement output shaft 39 which are coaxial of axis X. The axis X is directed from the input to the output for the convenience of the description which will follow.

The terms "upstream" and "downstream" are to be understood with reference to that orientation.

The input shaft 37 rotates as one with the crankshaft of the combustion engine, of which a part, or "tip", is depicted in Figure 2 under the reference 41.

In the example depicted, the crankshaft 41 is equipped with a flywheel 43 and connected to the input shaft 37 via a damper device 45.

The output shaft 39 is connected in terms of rotation to the primary input shaft of the gearbox, part of which is depicted in Figure 2 under the reference 47.

The transmission element 25 comprises a casing consisting essentially of a first half-shell 51 and of a second half-shell 52 which are assembled by fixing means distributed about the periphery of the casing and symbolized in the figures by chain line 54. The casing half-shells 51, 52 internally delimit a housing 53 inside which the electric motor 31, the clutches 33, 35 and the input 37 and output 39 shafts are arranged, coaxially.

The input shaft 37 and the output shaft 39 are mounted to rotate with respect to the casing 51, 52.

The input shaft 37 is a splined shaft that complements a hollow shaft 55 of the damper device 45 and an end part of the input shaft 37 projects axially from the first half-shell 51. The input shaft 37 is mounted to rotate on the first half-shell 51 via a rolling bearing 57.

The output shaft 39 is a hollow shaft with internal splines of a shape that complements the end of the box input shaft 47. In order to engage with the output shaft 39, the end of the box input shaft 47 projects into the housing 53.

The electric motor 31 comprises a stator 61 provided with a commutator secured to the first casing half-shell 51 and a rotor 63 mounted to rotate on the first half-shell 51 via a rolling bearing 65. The rotor 63 is arranged radially inside the stator 61.

The first 33 and second 35 clutches are of the wet type, and the transmission element 25 is equipped with an axial tube 71 for distributing lubricating and cooling fluid and control fluid. This tube 71 projects into the housing 53 of the second casing shell 52.

The transmission element 25 comprises an intermediate transmission member 73 mounted to rotate on the tube 71 radially on the outside via two rolling bearings 75, 76.

The intermediate member 73 is essentially formed with a hub 80 and four radial walls 81, 82, 83, 84 offset axially from one another and secured to the hub 80 by welding in the case of the walls 81, 82 and 84 and by shrink-fitting in the case of the wall 83. The periphery part of the first radial wall 81 is forming an additional first half-shell 89, whereas the periphery part of the rotor 63 is forming an additional second half-shell 88.

The intermediate member 73 is connected in terms of rotation to the rotor 63 via complementary axial teeth 87 in mesh with each other and formed respectively on a periphery part of the rotor 63 and on a periphery part of the first radial wall 81.

The second radial wall 82 is formed with an integral periphery annulus consisting of a first half-annulus 91 running in the downstream axial direction and of a second half-annulus 92 running in the upstream axial direction.

Accordingly, the input shaft 37 is formed, preferably as one piece, with a radial wall 95 extending into the housing 53 and which at its periphery has an axial annulus 97. The axial annulus 97 is coaxial with and radially on the outside of the downstream half-annulus 91. The first clutch 33 is arranged between the said half-annulus 91 and the said annulus 97.

Likewise, the output shaft 39 is formed, preferably as a single piece, with a radial wall 105 which extends into the housing 53 and which at its periphery has an axial annulus 107. The axial annulus 107 runs so that it is coaxial with and radially on the inside of the upstream half-annulus 92 of the intermediate member 73. The second clutch 35 is arranged between the said half-annulus 92 and the said axial annulus 107.

The transmission element 25 further comprises a first 111 and a second 112 actuating piston for respectively actuating the first 33 and the second 35 clutches, and a first 115 and a second 116 spring member respectively urging the first 111 and the second 112 pistons against the respective clutch 33, 35.

Inserted to bear axially between the piston 112 and the spring member 116 is a spacer that has essentially axial fingers 117 distributed about the periphery of an annulus. These fingers 117 pass through the wall 82.

The first clutch 33 essentially consists of a first series of discs 121 which rotate as one with the first half-annulus 91 because of splines and can move axially along the latter, along these splines, under the effect of the piston 111; and of a second series of discs 122 that rotate as one with the axial annulus 97 because of splines, and can move axially along the latter along these splines also under the effect of the piston 111. The first 121 and the second 122 discs are imbricated with one another in alternation.

The discs 121, 122 are stopped axially by a thrust bearing 123 on the opposite side to the piston 111.

It will be understood that the discs 121, 122 can move between a disengaged position in which the first discs 121 do not make contact with the second discs 122, and an engaged position of the first 121 and second 122 discs in which position the first 121 and second 122 discs are clamped against each other.

When the clutch 33 is in the disengaged position, the input shaft 37 and the intermediate member 73 are free to rotate one with respect to the other.

The first spring member 115, consisting in the example depicted of a spring washer, for example of the Belleville washer type, is fixed to the first radial wall 81 and urges the piston 111 into the engaged position.

The second clutch 35 is constructed and operates in the same way as the first: it comprises a first series of discs 131 associated with the second half-annulus 92, and a second series of discs 132 which are intercalated, this series being associated with the axial annulus 107. The axial movement of the discs 131, 132 is limited by a thrust bearing 133.

In the example depicted, the spring member 116 is a double spring washer of the Belleville type fixed to the second wall 82. The spring member 116 urges the piston 112 towards the engaged position of the second clutch 35, via the fingers 117.

As can be seen in Figure 2, the two clutches 33, 35 are axially and radially offset in a stepped or "staircase" arrangement, specifically the first clutch 33 is arranged radially on the outside of the second clutch 35. The latter is arranged inside the rotor 63.

The transmission element 25 is also provided with thrust needle bearings, a first 141 of which is inserted axially between the rolling bearing 65 and the radial wall 95 of the input shaft 37; a second 142 is inserted axially between the radial wall 95 and the radial wall 105 of the output shaft 39; a third 143 is inserted between the radial wall 105 and the radial wall 84 of the intermediate member 73; and a fourth 144 is inserted between the hub 80 and a shoulder of the tube 71.

The fluid distributing tube 71 is designed to distribute lubricating and cooling fluid inside the transmission element 25, that is to say inside the housing 53. The latter is closed in a fluid-tight manner, particularly at the joins between the two casing half-shells 51, 52, by means of a periphery seal 150.

Near the axis X, the sealing of the transmission element 25 to the lubricating and cooling fluid is performed on the one hand by a first lip seal 181, which bears against the first half-shell 51 and the exterior surface of the hollow shaft 55, and via a second lip seal 182 which bears against the interior surface of the tube 71 and against the exterior surfaces of the primary box input shaft 47 and, on the other hand, by an O-ring 183 placed between the input shaft 37 and the hollow shaft 55.

This tube 71 has, formed in its wall, a first radial duct 151 for supplying fluid, a first axial duct 153 for distribution, connected to the said supply duct 151, an orifice 155 formed between the distribution duct 153 and the outside of the tube 71, and an orifice 157 made between the distribution duct 153 and the inside of the tube.

The hub 80 of the intermediate member 73 is provided with a duct 161 opening onto the orifice 155 and thus placing the distribution duct 153 in communication with the housing 53.

In operation, the supply duct 151 is connected to a circuit for supplying cooling and lubricating fluid. This fluid is disseminated into the housing 53 via the distribution duct 153, the orifice 155 and the duct 161 so as to lubricate and cool the first clutch 33, the second clutch 35 and the electric motor 31.

It will be noted that the lubricating and cooling fluid is disseminated radially towards the stator 61 by virtue in particular of the passage 163 formed at the teeth 87. Sizing of this passage 163 allows control over the flow rate of fluid organized between the part of the housing 53 interior to the rotor 63 and the external part in which the stator 61 is arranged.

It will also be noted that the relative arrangement of the clutches 33, 35 and of the electric motor 31 makes it possible, because the lubricating and cooling fluid is centrifuged, to keep the first clutch 33 in a bath of lubricating and cooling fluid, when the transmission element 25 is in operation, while the region of the second clutch 35 contains a mist of this same fluid. The benefit of this arrangement is that the amount of fluid present in the region of each clutch can be tailored in particular to the calorific energy generated by these clutches.

The fluid bath, generally oil bath, in which the clutch 33 is kept is levelled by virtue of a passage 164 at the radial wall 81 and/or a passage 165 in the second half-shell 88.

As the first clutch 33 is heated up more than the second 35, it is actually necessary, around the first clutch, to organize a far higher cooling fluid flow rate.

The greater heating of the clutch 33 by comparison with the clutch 35 is due to the slip phases which are more severe for the first than for the second. Furthermore, the fact of keeping the clutch 35 in a mist of fluid rather than in a bath makes it possible to reduce the drag forces of this fluid on the primary box shaft.

Furthermore, the cooling and lubricating fluid is distributed to the bearing 57 and the rolling bearing 65 to cool and lubricate these items via, in succession: the distribution duct 153; the orifice 157; a radial passage 171 formed in the primary box input shaft 47; an axial duct 172 made in this shaft; a nozzle 175 allowing the fluid flow rate to be adjusted; an axial duct 177 formed in the input shaft 37; and finally a radial passage 179 opening near the bearing 57.

The fluid distributed along this path runs into the housing 53 through the bearing 57, to the rolling bearing 65 and the rotor 63, then to the stator 61. Furthermore fluid flow is advantageously possible through a direct channel, such as the bore 184 and the notch 185, to the rolling bearing 65 and the rotor 63 and then to the stator 61 (see Figure 2). The stator 61 and the rotor 63 are therefore cooled and lubricated not only by fluid that has passed through the orifice 155 and the passages 163, 164, and 165 but also by fluid which has passed through the orifice 157 and the path detailed above. This fluid also lubricates the thrust bearings 141, 142 and 143.

The steps that allow the pistons or pressure plates 111, 112 to be moved and the clutches 33, 35 thus to move from one position to another of their engaged and disengaged positions, and all intermediate positions, will now be described.

The first piston 111 defines, with the third radial wall 83 and the exterior surface of the wall 83, a first pressure chamber 201 while the second piston 112 defines, with the fourth radial wall 84 and the exterior surface of the hub 80, a second pressure chamber 202.

The first pressure chamber 201 is more or less sealed to a control fluid by means of a lip seal 205 fixed at the periphery of the radial wall 83 and bearing against a surface of the piston 111 and a lip seal 206 fixed to a radially internal edge of the piston 111 and bearing against the exterior surface of the axial extrusion of the radial wall 83.

Similarly, the pressure chamber 202 is more or less sealed by a first seal 215 bearing against the radial wall 84 and the piston 112, and by a second lip seal 216 bearing against the piston 112 and the exterior surface of a part 217 attached to the hub 80.

Each pressure chamber 201, 202 opens into the central bore of the hub 80 via two respective ducts 221, 222 for passing the supply of control fluid, these ducts being formed in the hub 80.

The fluid distributing tube 71 is provided, for its part, with two ducts 231, 232 connected to a control fluid supply circuit via respective radial supply ducts (not depicted) similar to the duct 151 and respective axial distribution ducts (not depicted) similar to the duct 153. The ducts 231, 232 communicate respectively with the ducts 221, 222.

In the example depicted, the control fluid is the same as the lubricating/cooling fluid, the control and lubricating/cooling circuits being partially common.

It will be understood that, starting from the clutch 33, 35 in an initial closed position, the switch to the disengaged position is performed by supplying the respective pressure chamber 201, 202 with control fluid under pressure. The corresponding piston 111, 112 is then moved axially in the downstream direction, along the orientation of the axis X (to the left in Figure 2), compressing the spring member 115, 116 and unclamping the stacks of discs 121, 122, 131, 132.

Under the effect of the spring 115, 116, the piston 111, 112 returns to its initial position when the control fluid pressure in the respective pressure chamber 201, 202 is returned to its initial low value. The clutch 33, 35 then returns to its "naturally closed", that is to say engaged, position when no control fluid is being supplied to the pressure chamber 201, 202.

It must be understood that the two clutches 33, 35 can be operated independently and that the foregoing description relating to the operation of the clutches 33,35 applies to each clutch independently.

Furthermore, the pressure of control fluid that can be delivered to the pressure chambers 201, 202 can vary over a range of values, such that the corresponding clutch 33, 35 can be brought into one of the following transmission states: zero transmission (disengaged), full transmission (engaged), or partial transmission (slipping).

It should be noted that the second radial wall 82 and the piston 112 between them define a compensation chamber 235 situated on the opposite side of the piston 112 to the second pressure chamber 202. This compensation chamber 235 is supplied with lubricating and cooling fluid via the duct 161 and an orifice 237 made in the radial wall 82. Thus, at high speed, the additional loads generated on the piston 112 by the centrifuging of the control fluid contained in the second pressure chamber 202 are compensated for and the piston 112 operates allowing the torque for which it was rated to pass between the discs 131, 132. It may also be noted that the clutch 33, the piston 111, and the spring 115 are sized in such a way as to make it possible to dispense with having a compensation chamber for controlling this clutch 33.

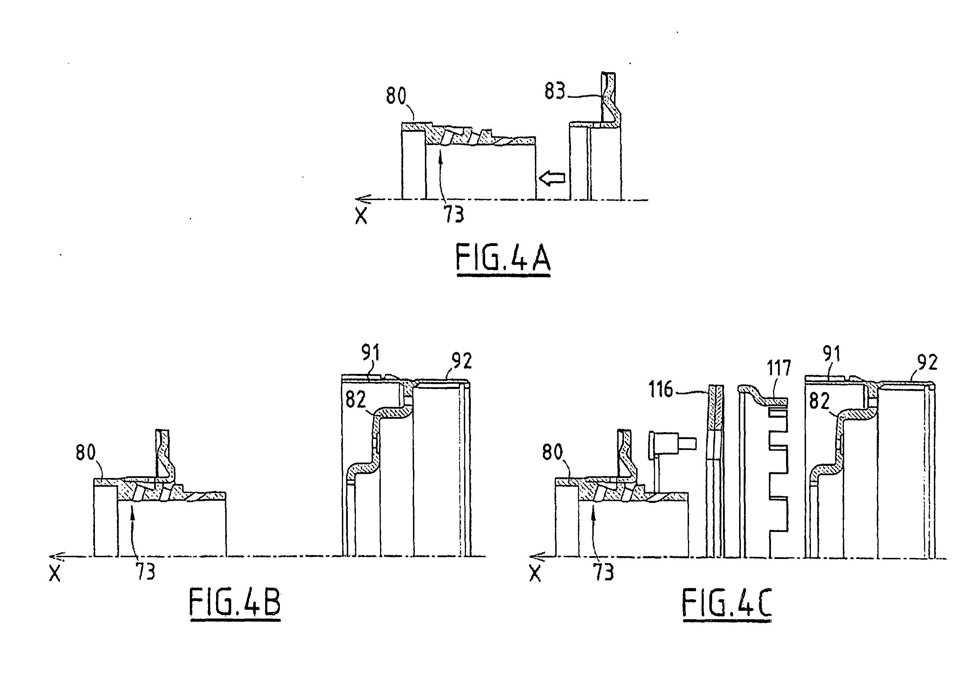

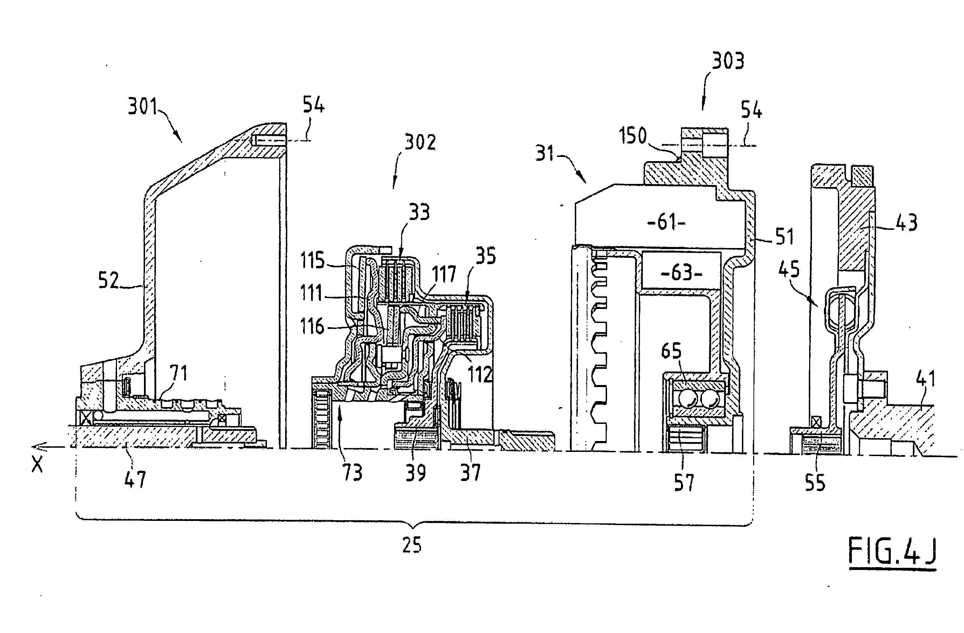

Some preferred modes of assembling the transmission element described hereinabove will now be described with reference to Figures 4A to 4J.

Figures 4A to 4I illustrate the mounting of the module 302 of the transmission element 25, which essentially comprises the clutches 33, 35, the input shaft 37, the output shaft 39, the intermediate member 73 and the pistons 111, 112. This module 302 may be termed a "two-clutch pack". It is this module that has been depicted in isolation in Figure 3.

The main steps of mounting the two-clutch pack, which are illustrated in Figures 4A to 4I, are performed in succession in the order of the figures. In a first step (Figure 4A) the radial wall 83 is push-fitted onto the hub 80 of the intermediate member 73.

In a second step (Figure 4B) the piece forming the radial wall 82 and the clutch half-annuli 91, 92 are offered up axially to face the assembly already obtained 73, 83.

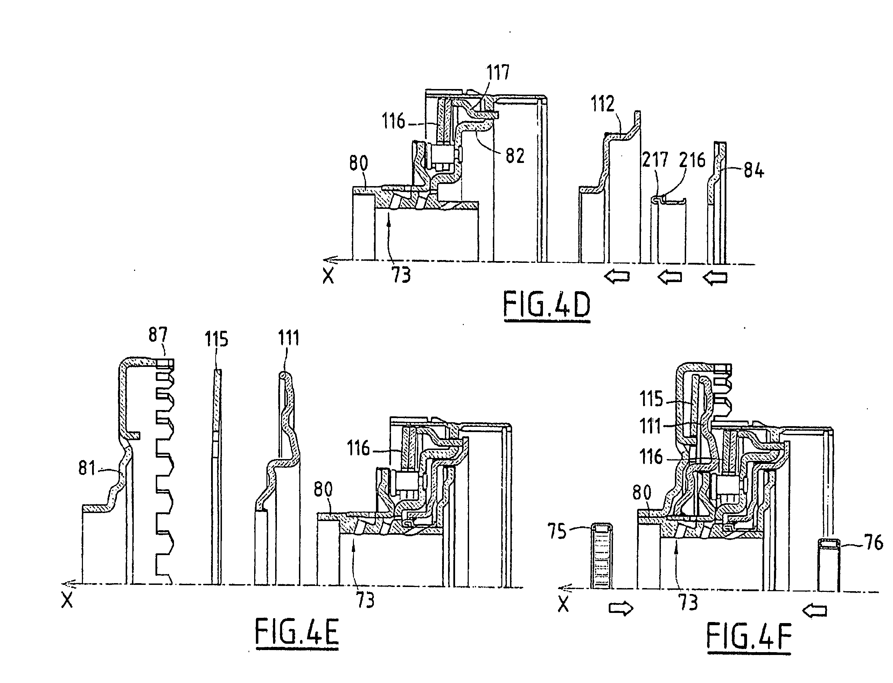

In a third step (Figure 4C) the radial wall 82 and the spring member 116 are axially connected by inserting between them the strut that has the axial fingers 117 and fixing them with the stud which may be riveted to the wall 82 as depicted in Figure 4D or welded. The fingers 117 then are passing through the radial wall 82. This subassembly 82, 116, 117 then being mounted on the intermediate member 73.

In a fourth step (Figure 4D) the second piston 112, the attached piece 217 supporting the seal 216 and the radial wall 84 are slipped in turn onto the hub 80 from the upstream side of the assembly obtained earlier.

In a fifth step (Figure 4E) the first piston 111, the spring member 115 and the radial wall 81 equipped with peripheral teeth 87 are mounted on the hub 80 from the downstream side of the assembly obtained earlier.

For example, on the one hand, the spring member 115 is pre-mounted on the wall 81 and, on the other hand, the piston 111 is pre-mounted on the hub 80, so that the whole can then be assembled.

In a sixth step (Figure 4F) the rolling bearings 75, 76 are pushed into the hub 80, from the downstream side and the upstream side respectively.

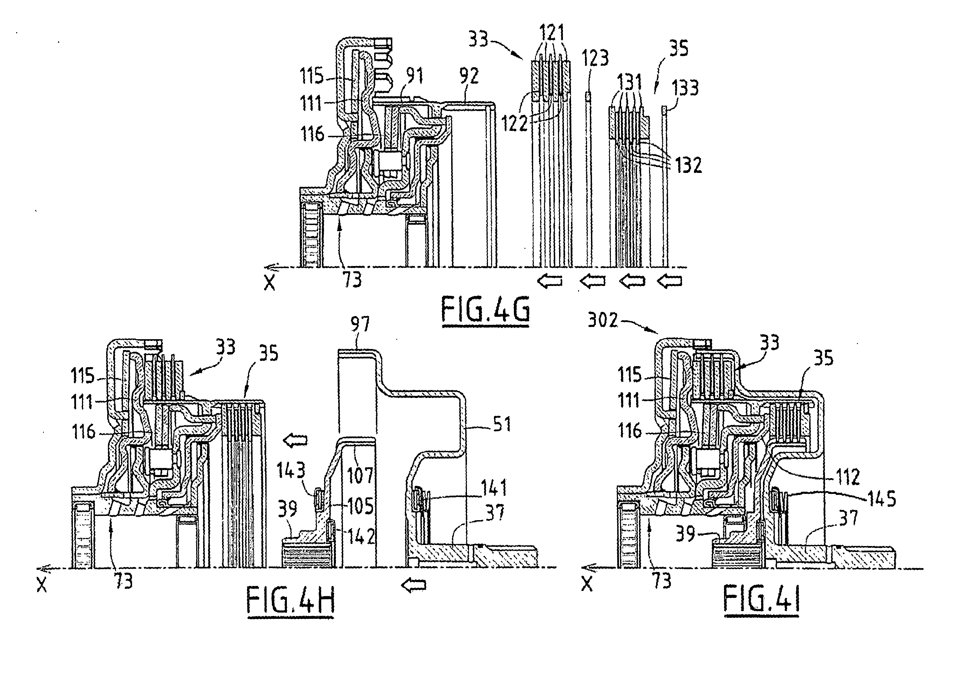

In a seventh step (Figure 4G) the following are mounted in succession from the upstream side:
- the first clutch 33 that is to say the stack of discs 121, 122 externally on the half-annulus 91, axially guiding the discs 121 along the splines of the half-annulus 91,
- the thrust bearing 123 as far as its stop position on the half-annulus 91,
- the second clutch 35, consisting of the stack of discs 131, 132 internally on the half-annulus 92, axially guiding the discs 131 along the splines of the half-annulus 92, and
- the thrust bearing 133 on the half-annulus 92, until it reaches its stop position thereon.

In an eighth step (Figure 4H) the following are mounted in succession from the upstream side:
- the output shaft 39, equipped with the thrust rolling bearings 142, 143, guiding the axial annulus 107 in the internal splines of the discs 132 of the second clutch 35, and
- the input shaft 37 equipped with its thrust rolling bearing 141, axially guiding the annulus 97 in the external splines of the discs 122 of the first clutch 33.

The two-clutch pack thus assembled is then available in the form of a module 302 depicted in Figure 4I. The module 302 is equipped with a third spring member 145 for tolerance compensation by supporting the module 302 via the fourth bearing 144 against the half-shell 52 and by supporting the module 302 via the rolling bearing 65 against the half-shell 51.

On completion of the above steps, the transmission element 25 is in the form of three preassembled separate modules:
- the first module 301 essentially comprises the second casing half-shell 52 and the fluid distribution tube 71, also known as the hydraulic supply tube;
- the second module 302, the main assembly steps of which were described above;
- the third module 303, that can be termed the "electric machine pack" essentially comprises the first casing half-shell 51, the electric motor 31 (stator 61 and rotor 63) the rotor 63 being mounted to rotate on the half-shell 51 via the rolling bearing 65.

The first module 301 is mounted beforehand on the gearbox (depicted only in terms of its primary shaft 47). Incidentally, provision may be made for the second half-shell 52 to be made as one piece with the gearbox casing.

According to a first embodiment of the method for assembling the transmission element 25:
- the second module 302 is mounted on the first module 301, the output hollow shaft 39 then being engaged through interlocking of the splines, with the end of the gearbox primary shaft 47, and the intermediate member 73 then being fitted onto the distribution tube 71, then
- the third module 303 is mounted on the assembly thus obtained, by slipping the half-shell 51 with its integral bearing 57 onto the input shaft 37 and bringing the connection into engagement via dogs 87.

The means 54 for fixing the two half-shells 51, 52 of the casing are then activated so as to assemble these two half-shells firmly together.

According to a second embodiment of the mounting method, the second 302 and third 303 modules are assembled first, then the assembly thus obtained is mounted on the first module 301, in a similar way to that which was described above.

It should be noted that, in both embodiments, the interfaces between the modules 301 and 302 on the one hand, and between the modules 302 and 303 on the other, consist of splines.

At this stage in the assembly it is also important to note that the distribution tube 71, apart from fulfilling its basic function of distributing the control and lubricating/cooling fluid, also discharges a function of centring the two-clutch pack in the casing 51, 52.

Whatever order of assembly is adopted, these orders corresponding to one or other of the two embodiments described above, all that then remains to be done is for the transmission element 25 thus formed to be mated onto the combustion engine. To do this, the tip of the crankshaft 41 is engaged on the end of the shaft 37, via the hollow shaft 55 of the damper device 45.

The transmission element and the mounting methods that have just been described make it possible, on a motor vehicle production line, to switch from a hybrid transmission configuration to a conventional transmission configuration and vice versa without major modification to the other parts of the drivetrain or to the assembly process.

This design also allows the electric machine pack and the two-clutch pack to be centred independently on the first half-shell of the casing.

The structure of the transmission element according to the invention advantageously allows an inertia element external to the clutch box to be replaced by the rotor of the electric machine contained within the transmission element.

Certain engines do in fact require the fitting of a double damping flywheel consisting of a primary inertia element and of a secondary inertia element.

By replacing the secondary inertia element of a double damping flywheel with part of the transmission element, the axial bulk and the cost of the damping system can be reduced.

### List of reference numbers

- 1: drivetrain
- 3: combustion engine
- 5: transmission element
- 7: gearbox
- 9: wheelset
- 11: electric machine
- 13: first clutch
- 15: second clutch
- 25: transmission element
- 31: electric machine
- 33: first clutch
- 35: second clutch
- 37: input shaft
- 39: output shaft
- 41: crankshaft (part)
- 43: flywheel
- 45: damper device
- 47: gearbox (part)
- 51: half-shell
- 52: half-shell
- 53: housing
- 54: chain line
- 55: hollow shaft
- 57: rolling bearing
- 61: stator
- 63: rotor
- 65: rolling bearing
- 71: axial tube
- 73: intermediate transmission member
- 75: rolling bearing
- 76: rolling bearing
- 80: hub
- 81: radial wall
- 82: radial wall
- 83: radial wall
- 84: radial wall
- 87: axial teeth
- 88: additional second half-shell
- 89: additional first half-shell
- 91: half-annulus
- 92: half-annulus
- 95: radial wall
- 97: axial annulus
- 105: radial wall
- 107: axial annulus
- 111: first actuating piston
- 112: second actuation piston
- 113: first actuating piston
- 114: first actuating piston
- 115: first spring member
- 116: second spring member
- 117: axial finger
- 121: disc
- 122: disc
- 123: thrust bearing
- 131: disc
- 132: disc
- 133: thrust bearing
- 141: first bearing
- 142: second bearing
- 143: third bearing
- 144: fourth bearing
- 145: third spring member
- 150: periphery seal
- 151: first radial duct
- 153: first axial duct
- 155: orifice
- 157: orifice
- 161: duct
- 163: passage
- 164: passage
- 165: passage
- 171: radial passage
- 172: axial duct
- 175: nozzle
- 177: axial duct
- 179: radial passage
- 181: first lip seal
- 182: second lip seal
- 183: O-ring
- 184: bore
- 185: notch
- 201: pressure chamber
- 202: pressure chamber
- 205: lip seal
- 206: lip seal
- 215: first lip seal
- 216: second lip seal
- 221: duct
- 222: duct
- 231: duct
- 232: duct
- 235: compensation chamber
- 237: orifice
- 301: first module
- 302: second module
- 303: third module

- X: axis

## Claims

1. Transmission element for a drivetrain of parallel hybrid type, the said element (25) comprising a movement input shaft (37) intended to be connected to a combustion engine (3), a movement output shaft (39) intended to be connected to a gearbox (7, 47), an electric machine (31) comprising a stator (61) and a rotor (63), a first clutch (33) providing the connection between the input shaft (37) and an intermediate member (73), and a second clutch (35) providing the connection between the intermediate member (73) and the output shaft (39), the intermediate member (73) being connected in terms of rotation to the rotor (63), whereas the transmission element comprises a casing comprising a first half-shell (51) rotationally supporting the input shaft (37) and a second half-shell (52) rotationally supporting the output shaft (39), these two half-shells (51, 52) defining a housing (53) in which the two clutches (33, 35) and the electric machine (31) are coaxially mounted, the transmission element further comprises a second casing comprising an additional first half-shell (89) and an additional second half-shell (88), **characterized in that** the intermediate member (73) and the rotor (63) mesh with one another via complementary axial sets of teeth (87), whereas, the sets of teeth (87) are constituents of the additional first and second half-shells (88, 89).

2. Transmission element according to claim 1, **characterized in that** at least one of the two clutches (35) is arranged radially inside the rotor (63) of the electric machine (31)

3. Transmission element according to Claim 1 or 2, **characterized in that** the two clutches (33, 35) are arranged radially inside the stator (61) of the electric machine (31).

4. Transmission element according to Claim 1, 2 or 3, **characterized in that** the first half-shell (51) is secured to the stator (61) and rotationally supports the rotor (63).

5. Transmission element according to any one of Claims 1 to 4, **characterized in that** the two clutches (33, 35), the input shaft (37) and output shaft (39) and the intermediate member (73) form part of a module (302) arranged as a single piece in the housing (53).

6. Transmission element according to Claim 5, **characterized in that** the module (302) is arranged within the second casing comprising the additional first half-shell (89) and the additional second half-shell (88).

7. Transmission element according to Claim 6, **characterized in that** the additional second half-shell (88) is torqueproof connected to the rotor (63).

8. Transmission element according to Claims 5 or 6, **characterized in that** the additional first half-shell (89) is torque-proof connected to the intermediate member (73) via a hub (80).

9. Transmission element according to any one of Claims 1 to 8, **characterized in that** the sets of teeth (87) are of claws type.

10. Transmission element according to one of the Claims 1 to 9, **characterized in that** the two clutches (33, 35) are of the wet type, the additional first and second half-shells (88, 89), in particular in the area of the axial sets of teeth (87), being sealed against a lubricating and/or cooling fluid in a manner that when rotating the two clutches (33, 35) a toroid of the lubricating and/or cooling fluid can be built within the second casing comprising the additional first and second half-shells (88, 89).

11. Transmission element according to Claim 10, **characterized in that** means are provided which allow adjusting the quantity of lubricating and/or cooling fluid available for building the toroid of the lubricating and/or cooling fluid.

12. Transmission element according to Claim 11, **characterized in that** the means comprise an outflow arrangement which is in a closed or slightly opened position at a low rotational speed of the clutches (33, 35) keeping a high quantity of lubricating and/or cooling fluid for lubricating the toroid and which is in a opened position at a high rotational speed of the clutches (33, 35) keeping a low quantity of lubricating and/or cooling fluid for building the toroid or prevents from building the toroid.

13. Transmission element according to claim 12, **characterized in that** the outflow arrangement is integrated in a ring sealing the area of the axial sets of teeth (87).

14. Transmission element according to one of the Claims 10 to 13, **characterized in that** the toroid fills at least one of the clutches or in particular only one of the clutches with lubricating and/or cooling fluid.

15. Transmission element according to one of the Claims 10 to 14, **characterized in that** the means comprise another outflow arrangement which adjusts the inner diameter of the toroid.

16. Transmission element according to Claim 15, **characterized in that** the other outflow arrangement comprises outflow openings (164, 165) within the second casing comprising the additional first and second half-shells (88, 89).

17. Transmission element according to any one of Claims 1 to 16, **characterized in that** the two clutches (33, 35) are of the wet type, the housing (53) being sealed against a lubricating and/or cooling fluid.

18. Transmission element according to any one of Claims 1 to 17, **characterized in that** the two clutches (33, 35) are returned to the engaged position.

19. Transmission element according to any one of Claims 1 to 18, **characterized in that** the two clutches (33, 35) are arranged in a stepped configuration, one being arranged radially on the outside of the other.

20. Transmission element according to Claim 19, **characterized in that** the first clutch (33) is arranged radially on the outside of the second clutch (35).

21. Transmission element according to Claim 20, **characterized in that** the stator (61) is arranged radially on the outside of the rotor (63) and the second clutch (35) is arranged radially on the inside of the rotor (63).

22. Transmission element according to one of the Claims 19 to 21, **characterized in that** the outer clutch (33) is a starter clutch and/or the inner clutch is a coupling clutch.

23. Transmission element according to any one of Claims 1 to 22, **characterized in that** at least one of the clutches (33, 35), and preferably both, is actuated by means of a control fluid via a respective single pressing component (111, 112).

24. Transmission element according to Claim 23, **characterized in that** the clutches (33, 35) are activated in axial direction.

25. Transmission element according to any one of Claims 1 to 24, **characterized in that** it comprises an axial fluid supply tube (71), particularly an axial hydraulic supply tube, secured to one (52) of the half-shells and projecting towards the inside of the housing (53).

26. Transmission element according to one of the proceeding Claims, **characterized in that** the clutches (33, 35) comprising one common carrier (91, 92) for friction discs (121, 131).

27. Transmission element according to Claim 26, **characterized in that** the common carrier (91) for friction discs (121, 131) is the inner carrier for friction discs (121) of one of the clutches (33) and the outer carrier for friction discs (131) of the other of the clutches (35).

28. Transmission element according to Claim 27, **characterized in that** the common carrier (91, 92) is in its longitudinal section of T-shape.

29. Transmission element according to Claim 28, **characterized in that** the radial leg (82) of the T-shape includes at least one axial passageway where through an actuator (117) of the other of the clutches (35) is conducted.

30. Transmission element according to Claim 29, **characterized in that** the actuator (117) of the other of the clutches (35) is arranged radially inside the one of the clutches (33).

31. Transmission element according to Claim 30, **characterized in that** spring elements (116) for retaining the activator (117) are arranged radially inside the one of the clutches (33).

32. Motor vehicle comprising a drivetrain of parallel hybrid type, the said drivetrain comprising a combustion engine (3), a gearbox (7) and a transmission element (25) according to any one of Claims 1 to 31 connecting the combustion engine (3) to the gearbox (7).

33. Method of assembling a transmission element according to any one of Claims 1 to 31, comprising the following successive steps:
- a subassembly securely comprising the first clutch (33), the second clutch (35) and the intermediate member (73) is mounted on a subassembly comprising the second half-shell (52); and
- a subassembly securely comprising the first half-shell (51) and the electric machine (31) is mounted on the assembly thus formed.

34. Method of assembling a transmission element according to any one of Claims 1 to 31, comprising the following successive steps:
- a subassembly securely comprising the first clutch (33), the second clutch (35) and the intermediate member (73) is mounted on a subassembly securely comprising the first half-shell (51) and the electric machine (31); and
- the assembly thus formed is mounted on a subassembly comprising the second half-shell (52).

35. Method according to Claim 33 or 34 for assembling a transmission element according to Claim 33, **characterized in that** the supply tube (71) is mounted beforehand on the second half-shell (52) so as to assemble the subassembly comprising the second half-shell (52).

## Patentansprüche

1. Getriebeelement für einen Antriebsstrang des parallel hybriden Typs, wobei das Element (25) einen Getriebe-Eingangsschaft (37) zur Verbindung mit einem Verbrennungskraftmotor (3) umfasst, einen Getriebe-Ausgangsschaft (39) zur Verbindung mit einem Getriebe-Gehäuse (7,47), einen Elektromotor (31) mit einem Stator (61) und einem Rotor (63), eine erste Kupplung (33) zur Darstellung der Verbindung zwischen dem Eingangsschaft (37) und einem Zwischenglied (73) und eine zweite Kupplung (35) zur Darstellung der Verbindung zwischen dem Zwischenglied (73) und dem Ausgangsschaft (39), wobei das Zwischenglied (73) zur Rotation mit dem Rotor (3) verbunden ist, worin das Getriebeelement ein Gehäuse umfasst, welches eine erste Halbschale (51) aufweist, die den Eingangsschaft (37) zur Rotation abstützt und eine zweite Halbschale (52), die den Ausgangsschaft (39) zur Rotation abstützt, wobei diese zwei Halbschalen (51,52) ein Gehäuse (53) bestimmen, in welchem die beiden Kupplungen (33,35) und der Elektromotor (31) koaxial angebracht sind, das Getriebeelement weiterhin ein zweites Gehäuse aufweist, welches zusätzlich eine erste Halbschale (89) umfasst und eine zusätzliche zweite Halbschale (88),
**dadurch gekennzeichnet, dass**
das Zwischenglied (73) und der Rotor (63) ineinandergreifen über komplementäre axiale Sätze von Zähnen (87), während die Sätze von Zähnen (87) Fortsätze der zusätzlichen ersten und zweiten Halbschalen (88,89) sind.

2. Getriebeelement nach Anspruch 1,
**dadurch gekennzeichnet, dass** zumindest eine der zwei Kupplungen (35) radial innerhalb des Rotors (63) des Elektromotors (31) angeordnet ist.

3. Getriebeelement nach einem der Ansprüche 1 oder 2,
**dadurch gekennzeichnet, dass** die zwei Kupplungen (33,35) radial innerhalb des Stators (61) des Elektromotors (31) angeordnet sind.

4. Getriebeelement nach Anspruch 1, 2 oder 3,
**dadurch gekennzeichnet, dass** die erste Halbschale (51) an dem Stator (61) befestigt ist und den Rotor (63) zur Rotation abstützt.

5. Getriebeelement nach einem der Ansprüche 1 bis 4,
**dadurch gekennzeichnet, dass** die zwei Kupplungen (33,35), der Eingangsschsaft (37) und der Ausgangsschaft (39) und das Zwischenglied (73) Teil eines Moduls (302) darstellen, welches als selbständiges Teil in dem Gehäuse (53) angeordnet ist.

6. Getriebeelement nach Anspruch 5,
**dadurch gekennzeichnet, dass** das Modul (302) innerhalb des zweiten Gehäuses angeordnet ist, welches die zusätzliche erste Halbschale (89) umfasst und die zusätzliche zweite Halbschale (88).

7. Getriebeelement nach Anspruch 6,
**dadurch gekennzeichnet, dass** die zusätzliche zweite Halbschale (88) drehmomentfest mit dem Rotor (63) verbunden ist.

8. Getriebeelement nach Anspruch 5 oder 6,
**dadurch gekennzeichnet, dass** die zusätzliche erste Halbschale (89) drehmomentfest mit dem Zwischenglied (73) über eine Nabe (80) verbunden ist.

9. Getriebeelement nach einem der Ansprüche 1 bis 8,
**dadurch gekennzeichnet, dass** die Sätze von Zähnen (87) als Klauen ausgebildet sind.

10. Getriebeelement nach einem der Ansprüche 1 bis 9,
**dadurch gekennzeichnet, dass** die zwei Kupplungen (33,35) nasslaufende Kupplungen sind, wobei die zusätzlichen ersten und zweiten Halbschalen (88,89), insbesondere im Bereich der Zahnsätze (87), gegen ein Schmiermittel und/oder ein Kühlfluid derart abgedichtet sind, dass bei Rotation der zwei Kupplungen (33,35) ein Toroid des Schmiermittels und /oder des Kühlfluids innerhalb des zweiten Gehäuses, welches die erste und die zweite Halbschale (88,89) umfassst, ausgebildet werden kann.

11. Getriebeelement nach Anspruch 10,
**dadurch gekennzeichnet, dass** ein Mittel zur Ermöglichung der Anpassung der Menge an Schmiermittel und/oder Kühlfluid vorhanden ist, was zur Bildung des Toroides aus Schmiermittel und/oder Kühlfluid verfügbar ist.

12. Getriebeelement nach Anspruch 11,
**dadurch gekennzeichnet, dass** das Mittel eine Auslassanordnung aufweist, welche sich in einer geschlossenen oder geringfügig offenen Position bei niedriger Drehgeschwindigkeit der Kupplungen (33,35) befindet, wobei eine große Menge an Schmiermittel und/oder Kühlfluid zur Schmierung des Toroids behalten wird und welche sich in geöffneter Position bei hoher Drehgeschwindigkeit der Kupplungen (33,35) befindet um eine niedrige Menge an Schmiermittel und/oder Kühlfluid zur Ausbildung des Toroids zu behalten oder die Ausbildung des Toroids zu verhindern.

13. Getriebeelement nach Anspruch 12,
**dadurch gekennzeichnet, dass** die Ausflussanordnung in einem Ring integriert ist, welcher den Bereich der axialen Sätze von Zähnen (87) abdichtet.

14. Getriebeelement nach einem der Ansprüche 10 bis 13,
**dadurch gekennzeichnet, dass** das Toroid zumindest eine der Kupplungen oder insbesondere lediglich eine der Kupplungen mit Schmiermittel und/oder Kühlfluid füllt.

15. Getriebeelement nach einem der Ansprüche 10 bis 14,
**dadurch gekennzeichnet, dass** das Mittel eine weitere Ausflussanordnung umfasst, welche den inneren Durchmesser des Toroids einstellt.

16. Getriebeelement nach Anspruch 15,
**dadurch gekennzeichnet, dass** die weitere Ausflussanordnung Ausflussöffnungen (164,165) innerhalb des zweiten Gehäuses umfasst, welches die zusätzlichen ersten und zweiten Halbschalen (88,89) aufweist.

17. Getriebeelement nach einem der Ansprüche 1 bis 16,
**dadurch gekennzeichnet, dass** die zwei Kupplungen (33,35) nasslaufende Kupplungen sind, wobei das Gehäuse (53) gegen ein Schmiermittel und/oder Kühlfluid abgedichtet ist.

18. Getriebeelement nach einem der Ansprüche 1 bis 17,
**dadurch gekennzeichnet, dass** die zwei Kupplungen (33,35) in die Eingriffsposition zurückführbar sind.

19. Getriebeelement nach einem der Ansprüche 1 bis 18,
**dadurch gekennzeichnet, dass** die zwei Kupplungen (33,35) in einem gestuften Aufbau angeordnet sind, wobei sich eine radial an der Außenseite der anderen befindet.

20. Getriebeelement nach Anspruch 19,
**dadurch gekennzeichnet, dass** die erste Kupplung (33) radial auf der Außenseite der zweiten Kupplung (35) angeordnet ist.

21. Getriebeelement nach Anspruch 20,
**dadurch gekennzeichnet, dass** der Stator (61) radial auf der Außenseite des Rotors (63) angeordnet ist und die zweite Kupplung (35) radial auf der Innenseite des Rotors (63).

22. Getriebeelement nach einem der Ansprüche 19 bis 21,
**dadurch gekennzeichnet, dass** die äußere Kupplung (33) eine Starterkupplung und/oder die innere Kupplung eine Einkopppelkupplung ist.

23. Getriebeelement nach einem der Ansprüche 1 bis 22,
**dadurch gekennzeichnet, dass** zumindest eine der Kupplungen (33,35) und vorzugsweise beide mittels eines Steuerfluids über eine entsprechende Einzeldruckkomponente (111,112) betätigt wird/werden.

24. Getriebeelement nach Anspruch 23,
**dadurch gekennzeichnet, dass** die Kupplungen (33,35) in axialer Richtung betätigt werden.

25. Getriebeelement nach einem der Ansprüche 1 bis 24,
**dadurch gekennzeichnet, dass** dies eine axiale Fluidversorgungsleitung (71) umfasst, insbesondere eine axiale Hydraulikversorgungsleitung, befestigt an einer (52) der Halbschalen und hervorstehend in Richtung auf die Innenseite des Gehäuses (53).

26. Getriebeelement nach einem der vorhergehenden Ansprüche,
**dadurch gekennzeichnet, dass** die Kupplungen (33,35) einen gemeinsamen Träger (91,92) für Reiblamellen (121,131) aufweisen.

27. Getriebeelement nach Anspruch 26,
**dadurch gekennzeichnet, dass** der gemeinsame Träger (91) für Reibkupplungen (121,131) der innere Träger für Reibkupplungen (121) von einer der Kupplungen (33) und der äußere Träger für Reibkupplungen (131) der weiteren der Kupplungen (35) ist.

28. Getriebeelement nach Anspruch 27,
**dadurch gekennzeichnet, dass** der gemeinsame Träger (91,92) in Längsrichtung T-förmig gestaltet ist.

29. Getriebeelement nach Anspruch 28,
**dadurch gekennzeichnet, dass** die radiale Wange (82) mit T-Form zumindest einen axialen Durchgang beinhaltet durch den ein Aktor (117) der weiteren der Kupplungen (35) hindurchgeführt ist.

30. Getriebeelement nach Anspruch 29,
**dadurch gekennzeichnet, dass** der Aktor (117) der weiteren der Kupplungen (35) radial innerhalb der einen der Kupplungen (33) angeordnet ist.

31. Getriebeelement nach Anspruch 30,
**dadurch gekennzeichnet, dass** Federelemente (116) zur Rückstellung des Aktors (117) radial innerhalb der einen der Kupplungen (33) angeordnet sind.

32. Motorfahrzeug, aufweisend einen Antriebsstrang des parallelen hybriden Typs, wobei der Antriebsstrang einen Verbrennungskraftmotor (3) umfasst, einen Getriebekasten (7) und ein Getriebeelement (25) entsprechend einem der Ansprüche 1 bis 31, wobei der Verbrennungskraftmotor (3) mit dem Getriebekasten (7) verbunden ist.

33. Verfahren zur Montage eines Getriebeelements nach einem der Ansprüche 1 bis 31, aufweisend die folgenden aufeinanderfolgenden Schritte:
- eine Unterbaugruppe, welche die erste Kupplung (33), die zweite Kupplung (35) und das Zwischenglied (73) fest aufnimmt, ist an einer Unterbaugruppe angebracht, welche die zweite Halbschale (52) umfasst; und
- eine Unterbaugruppe, welche die erste Halbschale (51) und den Elektromotor (31) umfasst ist an der derart ausgestalteten Anordnung angebracht.

34. Verfahren zur Montage eines Getriebeelements nach einem der Ansprüche 1 bis 31, aufweisend die folgenden aufeinanderfolgenden Schritte:
- eine Unterbaugruppe, welche die erste Kupplung (33), die zweite Kupplung (35) und das Zwischenglied (73) umfasst ist an einer Unterbaugruppe angebracht, welche die erste Halbschale (51) und den Elektromotor (31) umfasst; und
- die derart ausgebildete Anordnung wird an einer Unterbaugruppe befestigt, welche die zweite Halbschale (52) umfasst.

35. Verfahren nach Anspruch 33 oder 34 zur Montage eines Getriebeelements nach Anspruch 33, **dadurch gekennzeichnet, dass** die Versorgungsleitung (71) vorab an der zweiten Halbschale (52). befestigt wird um die Unterbaugruppe zu montieren, welche die zweite Halbschale (52) umfasst.

## Revendications

1. Elément de transmission pour un train de transmission de type hybride parallèle, ledit élément (25) comprenant un arbre d'entrée en mouvement (37) destiné à être connecté à un moteur à combustion (3), un arbre de sortie en mouvement (39) destiné à être connecté à une boîte de vitesses (7, 47), une machine électrique (31) comprenant un stator (61) et un rotor (63), un premier embrayage (33) assurant la connexion entre l'arbre d'entrée (37) et un élément intermédiaire (73), et un deuxième embrayage (35) assurant la connexion entre l'élément intermédiaire (73) et l'arbre de sortie (39), l'élément intermédiaire (73) étant connecté en termes de rotation au rotor (63), alors que l'élément de transmission comprend un boîtier comprenant une première demi-coque (51) supportant de manière rotative l'arbre d'entrée (37) et une deuxième demi-coque (52) supportant de manière rotative l'arbre de sortie (39), ces deux demi-coques (51, 52) définissant un logement (53) dans lequel les deux embrayages (33, 35) et la machine électrique (31) sont montés de façon coaxiale, l'élément de transmission comprend en outre, un deuxième boîtier comprenant une première demi-coque supplémentaire (89) et une deuxième demi-coque supplémentaire (88), **caractérisé en ce que** l'élément intermédiaire (73) et le rotor (63) s'engrènent l'un avec l'autre via des ensembles axiaux complémentaires de dents (87), tandis que les ensembles de dents (87) sont des constituants de la première et de la deuxième demi-coque supplémentaire (88, 89).

2. Elément de transmission selon la revendication 1, **caractérisé en ce que** au moins un des deux embrayages (35) est disposé de manière radiale à l'intérieur du rotor (63) de la machine électrique (31).

3. Elément de transmission selon la revendication 1 ou 2, **caractérisé en ce que** les deux embrayages (33, 35) sont disposés de manière radiale à l'intérieur du stator (61) de la machine électrique (31).

4. Elément de transmission selon la revendication 1, 2 ou 3, **caractérisé en ce que** la première demi-coque (51) est fixée au stator (61) et supporte de manière rotative le rotor (63).

5. Elément de transmission selon l'une quelconque des revendications 1 à 4, **caractérisé en ce que** les deux embrayages (33, 35), l'arbre d'entrée (37) et l'arbre de sortie (39) et l'élément intermédiaire (73) font partie d'un module (302) agencé en une pièce unique dans le logement (53).

6. Elément de transmission selon la revendication 5, **caractérisé en ce que** le module (302) est agencé dans le deuxième boîtier comprenant la première demi-coque supplémentaire (89) et la deuxième demi-coque supplémentaire (88).

7. Elément de transmission selon la revendication 6, **caractérisé en ce que** la deuxième demi-coque supplémentaire (88) est résistante au couple connecté au rotor (63).

8. Elément de transmission selon les revendications 5 ou 6, **caractérisé en ce que** la première demi-coque supplémentaire (89) est résistante au couple connecté à l'élément intermédiaire (73) via un moyeu (80).

9. Elément de transmission selon l'une quelconque des revendications 1 à 8, **caractérisé en ce que** les ensembles de dents (87) sont de type à griffes.

10. Elément de transmission selon l'une quelconque des revendications 1 à 9 **caractérisé en ce que** les deux embrayages (33, 35) sont de type mouillé, la première et la deuxième demi-coque supplémentaire (88, 89), en particulier dans la région des ensembles axiaux des dents (87), étant rendu étanche à un fluide lubrifiant et/ou un liquide de refroidissement de façon à ce que lorsque les deux embrayages (33, 35) pivotent, un tore du fluide lubrifiant et/ou du liquide de refroidissement puisse être fabriqué dans le deuxième boîtier comprenant la première et la deuxième demi-coque supplémentaire (88, 89).

11. Elément de transmission selon la revendication 10, **caractérisé en ce que** des moyens sont fournis qui permettent d'ajuster la quantité de fluide lubrifiant et/ou de liquide de refroidissement disponible pour fabriquer le tore du fluide lubrifiant et/ou du liquide de refroidissement.

12. Elément de transmission selon la revendication 11, **caractérisé en ce que** les moyens comprennent un agencement d'écoulement qui se trouve dans une position fermée ou dans une position légèrement ouverte à une vitesse de rotation faible des embrayages (33, 35) conservant une quantité élevée de fluide lubrifiant et/ou de liquide de refroidissement pour lubrifier le tore et qui se trouve dans une position ouverte à une vitesse de rotation élevée des embrayages (33, 35) conservant une quantité faible de fluide lubrifiant et/ou de liquide de refroidissement pour fabriquer le tore ou empêcher de fabriquer le tore.

13. Elément de transmission selon la revendication 12, **caractérisé en ce que** l'agencement d'écoulement est intégré dans un anneau qui rend étanche la région des ensembles axiaux des dents (87).

14. Elément de transmission selon l'une des revendications 10 à 13, **caractérisé en ce que** le tore remplit au moins un des embrayages ou en particulier seulement un des embrayages avec le fluide lubrifiant et/ou le liquide de refroidissement.

15. Elément de transmission selon l'une des revendications 10 à 14, **caractérisé en ce que** les moyens comprennent un autre agencement d'écoulement qui ajuste le diamètre interne du tore.

16. Elément de transmission selon la revendication 15, **caractérisé en ce que** l'autre agencement d'écoulement comprend des ouvertures d'écoulement (164, 165) dans le deuxième boîtier comprenant la première et la deuxième demi-coque supplémentaire (88, 89).

17. Elément de transmission selon l'une quelconque des revendications 1 à 16, **caractérisé en ce que** les deux embrayages (33, 35) sont de type mouillé, le logement (53) étant rendu étanche au fluide lubrifiant et/ou au liquide de refroidissement.

18. Elément de transmission selon l'une quelconque des revendications 1 à 17, **caractérisé en ce que** les deux embrayages (33, 35) sont renvoyés dans la position d'embrayage.

19. Elément de transmission selon l'une quelconque des revendications 1 à 18 **caractérisé en ce que** les deux embrayages (33, 35) sont agencés dans une configuration étagée, l'un étant agencé de manière radiale à l'extérieur de l'autre.

20. Elément de transmission selon la revendication 19, **caractérisé en ce que** le premier embrayage (33) est agencé de manière radiale à l'extérieur du deuxième embrayage (35).

21. Elément de transmission selon la revendication 20, **caractérisé en ce que** le stator (61) est agencé de manière radiale à l'extérieur du rotor (63) et le deuxième embrayage (35) est agencé de manière radiale à l'intérieur du rotor (63).

22. Elément de transmission selon l'une des revendications 19 à 21 **caractérisé en ce que** l'embrayage externe (33) est un embrayage de démarreur et/ou l'embrayage interne est un embrayage de couplage.

23. Elément de transmission selon l'une quelconque des revendications 1 à 22, **caractérisé en ce que** au moins un des embrayages (33, 35), et de préférence les deux, soit actionné au moyen d'un fluide de contrôle via un composant respectif unique de compression (111, 112).

24. Elément de transmission selon la revendication 23 **caractérisé en ce que** les embrayages (33, 35) sont actionnés dans une direction axiale.

25. Elément de transmission selon l'une quelconque des revendications 1 à 24 **caractérisé en ce qu'**il comprend un tube d'alimentation en fluide axial (71), en particulier un tube d'alimentation hydraulique axial, fixé sur une des demi-coques (52) et faisant ses projections vers l'intérieur du logement (53).

26. Elément de transmission selon l'une des revendications précédentes, **caractérisé en ce que** les embrayages (33, 35) comprenant un dispositif de transport ordinaire (91, 92) pour des disques de friction (121, 131).

27. Elément de transmission selon la revendication 26 **caractérisé en ce que** le dispositif de transport ordinaire (91) pour des disques de friction (121, 131) est le dispositif de transport interne pour les disques de friction (121) d'un des embrayages (33) et le dispositif de transport externe pour les disques de friction (131) de l'autre des embrayages (35).

28. Elément de transmission selon la revendication 27 **caractérisé en ce que** le dispositif de transport ordinaire (91, 92) est dans sa section longitudinale en forme de T.

29. Elément de transmission selon la revendication 28, **caractérisé en ce que** la jambe radiale (82) en forme de T comprend au moins une voie de passage axiale où il est conduit par l'intermédiaire d'un actionneur (117) de l'autre des embrayages (35).

30. Elément de transmission selon la revendication 29 **caractérisé en ce que** l'actionneur (117) de l'autre des embrayages (35) est agencé de manière radiale à l'intérieur de l'un des embrayages (33).

31. Elément de transmission selon la revendication 30 **caractérisé en ce que** des éléments ressorts (116) pour retenir l'actionneur (117) sont agencés de manière radiale à l'intérieur de l'un des embrayages (33).

32. Véhicule à moteur comprenant un train de transmission de type hybride parallèle, ledit train de transmission comprenant un moteur de combustion (3), une boîte de vitesses (7), et un élément de transmission (25) selon l'une quelconque des revendications 1 à 31 reliant le moteur à combustion (3) à la boîte de vitesses (7).

33. Procédé d'assemblage d'un élément de transmission selon l'une quelconque des revendications 1 à 31 comprenant les étapes successives suivantes :
- un sous-ensemble comprenant de façon sécurisée le premier embrayage (33), le deuxième embrayage (35) et l'élément intermédiaire (73), est monté sur un sous-ensemble comprenant la deuxième demi-coque (52) ; et
- un sous-ensemble comprenant de façon sécurisée la première demi-coque (51) et la machine électrique (31), est monté sur l'ensemble ainsi formé.

34. Procédé consistant à assembler un élément de transmission selon l'une quelconque des revendications 1 à 31, comprenant les étapes successives suivantes :
- un sous-ensemble comprenant de façon sécurisée le premier embrayage (33), le deuxième embrayage (35) et l'élément intermédiaire (73), est monté sur un sous-ensemble comprenant de façon sécurisée la première demi-coque (51) et la machine électrique (31) ; et
- l'ensemble ainsi formé est monté sur un sous-ensemble comprenant la deuxième demi-coque (52).

35. Procédé selon la revendication 33 ou 34 consistant à assembler un élément de transmission selon la revendication 33, **caractérisé en ce que** le tube d'alimentation (71) est monté au préalable sur la deuxième demi-coque (52) afin d'assembler le sous-ensemble comprenant la deuxième demi-coque (52).
